(19)

Europäisches
Patentamt
European
Patent Office
Office européen
des brevets

(11) **EP 3 159 123 A1**

(12) **EUROPEAN PATENT APPLICATION**
published in accordance with Art. 153(4) EPC

(43) Date of publication:
**26.04.2017   Bulletin 2017/17**

(21) Application number: **15809867.3**

(22) Date of filing: **17.06.2015**

(51) Int Cl.:
**B25J 13/08** (2006.01)       **B25J 9/16** (2006.01)

(86) International application number:
**PCT/KR2015/006157**

(87) International publication number:
**WO 2015/194868 (23.12.2015 Gazette 2015/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **17.06.2014   KR 20140073708**

(71) Applicant: **Yujin Robot Co., Ltd.**
**Seoul 153-802 (KR)**

(72) Inventors:
• **SHIN, Kyung Chul**
  **Seoul 110-846 (KR)**

• **PARK, Seong Ju**
  **Gunpo-si**
  **Gyeonggi-do 435-802 (KR)**
• **CHANG, Min**
  **Seongnam-si**
  **Gyeonggi-do 463-905 (KR)**
• **LEE, Jae Young**
  **Gunpo-si**
  **Gyeonggi-do 435-710 (KR)**
• **MOON, Byung Kwon**
  **Seoul 121-887 (KR)**

(74) Representative: **Capasso, Olga et al**
**De Simone & Partners SpA**
**Via Vincenzo Bellini, 20**
**00198 Roma (IT)**

(54) **DEVICE FOR CONTROLLING DRIVING OF MOBILE ROBOT HAVING WIDE-ANGLE CAMERAS MOUNTED THEREON, AND METHOD THEREFOR**

(57) Disclosed are an apparatus for controlling movement of a mobile robot mounted with a wide angle camera and a method thereof. An apparatus of recognizing a position of a mobile robot includes two wide angle cameras which obtain one pair of stereo images on a region of interest including a vertical direction and a horizontal direction in accordance with movement of a mobile robot; an inertial measurement unit (IMU) which obtains inertial information of a mobile robot; a position recognizing unit which predicts state information using one between first odometry information calculated based on at least one pair of stereo images and second odometry information calculated based on the inertial information and estimates a current position using the predicted state information and a previously stored key frame, by a position recognizing unit; and a movement control unit which controls movement of the mobile robot based on the estimated position.

[FIG. 1]

**Description**

## CROSS-REFERENCE TO RELATED APPLICATIONS

This application is a continuation of International Application No. PCT/KR2015/006157, filed on June 17, 2015, which claims priority to and the benefit of Korean Patent Application No. 10-2014-0073708 filed in the Korean Intellectual Property Office on June 17, 2014, both of which are hereby incorporated by reference in their entireties.

## TECHNICAL FIELD

The present invention relates to a movement control method of a mobile robot, and more particularly, to an apparatus for controlling the movement of a mobile robot mounted with a wide angle camera and a method thereof.

## BACKGROUND ART

Recently, according to development of a robot technology, a mobile robot which sets a route by itself and moves is utilized. In order to allow the mobile robot to efficiently determine a position and move in a space, it is required to allow the mobile robot to recognize a position of the robot on the space while generating a map for a space where the robot moves.

The mobile robot is driven by a dead reckoning navigation using a gyroscope and an encoder provided in a driving motor and generates a map by analyzing an image using a camera provided in an upper portion. In this case, when an error occurs in the driving information from the gyroscope and the encoder, image information obtained from the camera is utilized to correct an accumulated error.

However, a location based mobile robot which has been developed until now is developed under an assumption of a movement on a two-dimensional plane using a monocular camera or a laser scanner. However, when the monocular camera is used, it is difficult to know a distance to a feature point. Therefore, as the error of the dead reckoning navigation is increased, the problem arises that very many errors may be included in the position recognizing results.

In addition, with the existing methods, in various situations, for example, when the mobile robot is confined in a tilted state during movement, when the mobile robot passes over a high threshold, when the mobile robot moves onto an edge of the threshold or an edge of a carpet while using its monocular camera for SLAM (Simulaneous Localization and Mapping), the pose of the mobile robot is not accurately estimated so that it is difficult to control the mobile robot.

## SUMMARY OF THE INVENTION

To solve the technical issues presented in the background, an object of the present invention is to provide an apparatus for controlling movement of a mobile robot mounted with a wide angle camera which estimates a position based on one odometry information selected between odometry information calculated by a stereo image based visual odometry and odometry information calculated by an inertial information based internal odometry and a method thereof.

Another object of the present invention is to provide an apparatus for controlling movement of a mobile robot mounted with a wide angle camera which extracts a predetermined number of horizontal lines from a stereo image to perform dense stereo alignment along the extracted horizontal lines to obtains distance information to an obstacle as a result and a method thereof.

Still another object of the present invention is to provide an apparatus for controlling movement of a mobile robot mounted with a wide angle camera which estimates three-dimensional angle information using measured inertial information and determines a pose and an operation state of the mobile robot using the estimated three-dimensional angle information.

However, an object of the present invention is not limited to the above description and other objects which have not been mentioned above will be more apparent to those skilled in the art from a reading of the following description.

According to the present invention, the position is estimated based on one odometry information selected between a stereo image based odometry and odometry information calculated based on inertial information based odometry, thereby reducing an positional error incurred when the mobile robot is tilted or slides.

Further, according to the present invention, a problem vulnerable to a positional error incurred when the mobile robot is tilted or slides is solved so that the position may be stably recognized.

Further, according to the present invention, a predetermined number of horizontal lines is extracted from a stereo image to perform dense stereo alignment along the extracted horizontal lines to obtain distance information to an obstacle as a result, thereby obtaining distance information to an obstacle without attaching an expensive dedicated sensor for measuring a distance.

According to the present invention, three-dimensional angle information is estimated using measured inertial information and a pose and an operation state of a mobile robot using the estimated three-dimensional angle information, thereby accurately three-dimensionally estimating tilting information of the mobile robot.

The foregoing summary is illustrative only and is not intended to be in any way limiting. In addition to the illustrative aspects, embodiments, and features described above, further aspects, embodiments, and features will become apparent by reference to the drawings and the following detailed description.

## BRIEF DESCRIPTION OF THE DRAWINGS

FIG. 1 is a view illustrating an apparatus for controlling the movement of a mobile robot according to an exemplary embodiment of the present invention.

FIG. 2 is a view illustrating a region of interest of a wide angle camera according to an exemplary embodiment of the present invention.

FIG. 3 is a diagram illustrating a detailed configuration of a control unit according to an exemplary embodiment of the present invention.

FIG. 4 is a view illustrating a space recognizing process according to an exemplary embodiment of the present invention.

FIG. 5 is a view illustrating uncertainty of a three-dimensional point according to an exemplary embodiment of the present invention.

FIG. 6 is a view illustrating three-dimensional information on an edge according to an exemplary embodiment of the present invention.

FIG. 7 is a view illustrating a position recognizing error incurred when a mobile robot is tilted.

FIG. 8 is a view illustrating a method of determining a state of a mobile robot according to an exemplary embodiment of the present invention.

FIG. 9 is a view illustrating a detailed configuration of an IMU according to another exemplary embodiment of the present invention.

FIG. 10 is a view illustrating an example which sets to intentionally stop a cleaning robot while the cleaning robot operates.

FIG. 11 is a view illustrating a bias correcting process according to an exemplary embodiment of the present invention.

FIG. 12 is a view illustrating an obstacle sensing process according to an exemplary embodiment of the present invention.

FIG. 13 is a view illustrating a method of recognizing a position of a mobile robot according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

## DETAILED DESCRIPTION

Hereinafter, an apparatus for recognizing the position of a mobile robot mounted with a wide angle camera and a method thereof according to an exemplary embodiment of the present invention will be described with reference to accompanying drawings. Parts which are required to understand an operation and an effect of the present invention will be mainly described in detail.

In the description of components of an exemplary embodiment, a component having the same name may be denoted by a different reference numeral in some drawings but may be denoted by the same reference numeral even in different drawings. However, even in this case, it does not mean that the component has different functions depending on the exemplary embodiment or the components have the same function in the different exemplary embodiments but the function of each of the components may be determined based on the description of the components in the corresponding exemplary embodiment.

Further, the present invention suggests a new position recognizing method which estimates a position based on one odometry information selected between odometry information calculated by a stereo image based visual odometry and odometry information calculated by an inertial information based internal odometry, and extracts a predetermined number of horizontal lines from a stereo image to perform dense stereo alignment along the extracted horizontal lines to obtains distance information to an obstacle as a result.

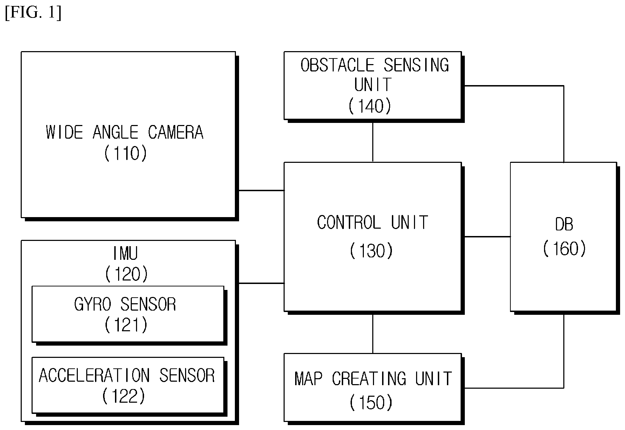

FIG. 1 is a view illustrating an apparatus for controlling the movement of a mobile robot according to an exemplary embodiment of the present invention.

As illustrated in FIG. 1, a mobile robot position recognizing apparatus according to an exemplary embodiment of the present invention includes a camera 110, an inertial measurement unit (IMU) 120, a control unit 130, an obstacle sensing unit 140, a map creating unit 150, and a database (DB) 160.

Two cameras 110 may be provided to obtain a pair of stereo images, that is, a left image and a right image. Here, two cameras indicate that two different lens are used to obtain an image at two visions. Further, an example that two lenses are provided in one image obtaining device to obtain two images is also same meaning. In this case, the camera 110 may be mounted to have a predetermined interested area. Here, the region of interest may be a region to be photographed using the camera 110 provided in the mobile robot.

The camera 110 may be desirably a wide angle camera. The wide angle camera is a camera which photographs using a wide angle lens having an angle of view which is larger than that of a general camera lens. It is desirable to use a wide angle camera for the mobile robot to obtain a broader surrounding image. For example, the wide angle camera may be a camera using a fish eye lens. Here, in the wide angle camera, an angle of view of the wide angle lens may be 60 to 270 degrees. In the wide angle camera according to the exemplary embodiment of the present invention, the angle of view is not limited to the range of the above-described angle view and a camera using a lens having various range of an angle of view may be used.

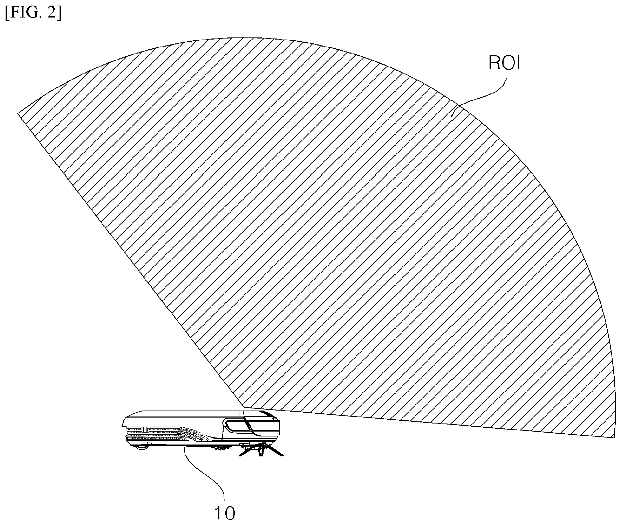

FIG. 2 is a view illustrating a region of interest of a wide angle camera according to an exemplary embodiment of the present invention.

As illustrated in FIG. 2, two cameras 110 according to the exemplary embodiment of the present invention are mounted to be directed to both a ceiling and a front side using the wide angle camera in the mobile robot 10 as compared with the mobile robot of the related art which is directed to the ceiling or the front side so that in the mobile robot, both the ceiling and the front side may be set as regions of interest (ROI).

For example, the camera may photograph regions in both a horizontal direction and a vertical direction using the wide angle lens.

According to the exemplary embodiment of the present invention, both the ceiling and the front side are set as the regions of interest using the camera 110 mounted as described above, so that the feature points may be easily secured. Further, the position may be recognized even when it is difficult to find feature points and an obstacle at the front side may be recognized.

The IMU 120 measures inertial information of the mobile robot, for example, information such as a position, a posture, and the like. The IMU 120 may include a gyro sensor 121 and an acceleration sensor 122.

The gyro sensor 121 collects angular velocity information of the mobile robot.

The mobile robot according to the exemplary embodiment of the present invention distinguishes a pose or an operation state of the mobile robot using three-dimensional angle information and is controlled using the distinguished pose or the operation state, so that the gyro sensor 121 is desirably a triaxial sensor.

That is, the gyro sensor 121 may collect angular velocity information of three axes including an x-axis, a y-axis, and a z-axis.

The angular velocities of three axes including an x-axis, a y-axis, and a z-axis which is detected by the triaxial gyro sensor 121 are referred to as roll, pitch, and yaw.

Specifically, rotation around the x-axis of the mobile robot is called the roll, rotation around the y-axis of the mobile robot is called the pitch, and rotation around the z-axis of the mobile robot is called the yaw.

The three-dimensional angle information to be obtained in the exemplary embodiment of the present invention is roll, pitch, and yaw.

The acceleration sensor 122 measures a gravitational acceleration and acceleration in accordance with the movement of the mobile robot.

The acceleration sensor 122 may be a triaxial sensor, similarly to the gyro sensor 121.

That is, the acceleration sensor 122 may collect acceleration information of three axes including an x-axis, a y-axis, and a z-axis.

The control unit 130 estimates a position, a pose, and a state based on the stereo image input from the wide angle camera 110 and inertial information input from the IMU 120 and controls the movement of the mobile robot based on the estimated position, pose, and state.

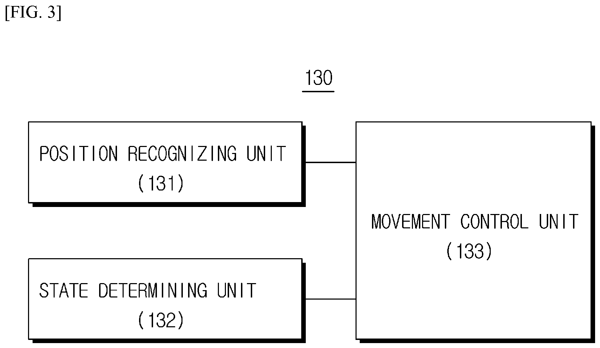

FIG. 3 is a diagram illustrating a detailed configuration of a control unit according to an exemplary embodiment of the present invention.

As illustrated in FIG. 3, the control unit 130 according to the exemplary embodiment of the present invention includes a position recognizing unit 131 which recognizes a position, a state determining unit 132 which determines a pose and a state, and a movement control unit 133 which controls the movement. The position recognizing unit 131 receives a stereo image from the wide angle camera 110 and recognizes a given space based on the received stereo image whenever the mobile robot moves a predetermined distance.

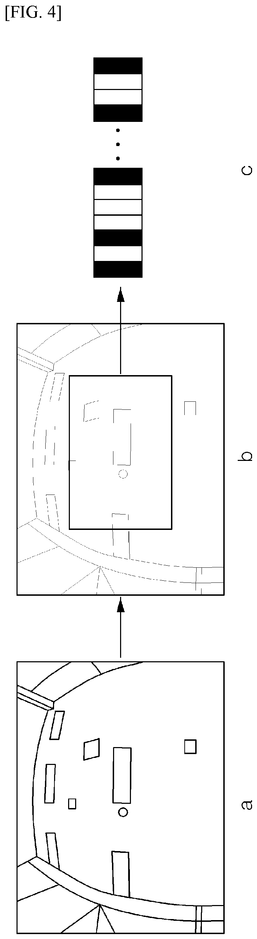

FIG. 4 is a view illustrating a space recognizing process according to an exemplary embodiment of the present invention.

As illustrated in FIG. 4, the position recognizing unit 131 recognizes the given space whenever the mobile robot moves a predetermined distance or a new key frame is generated to create a database thereof.

The position recognizing unit 131 reduces the received stereo image to have a predetermined size to be blurred. Here, the predetermined size may be one eighth of the received stereo image. Referring to FIG. 4, the position recognizing unit 131 reduces the received stereo image (a) and generates a blurred image (b).

The position recognizing unit 131 encodes the blurred stereo image using a binary robust independent elementary features (BRIEF) binary descriptor to generate binary data as the encoding result. Here, the binary data may be generated to be 32 bytes in size. Here, the BRIEF binary descriptor may be encoded using a method introduced in {BRIEF}: Computing a Local Binary Descriptor Very Fast, M. Calonder, V. Lepetit, M. Ozuysal, T. Trzcinski, C. Strecha, and P. Fua IEEE Transactions on Pattern Analysis and Machine Intelligence 2012. Here, the binary data may be generated to be 32 bytes in size. FIG. 4C is a reference view illustrating the BRIEF binary descriptor.

The position recognizing unit 131 compares the binary data generated as described above and data indicating an absolute position of the mobile robot in the previously stored key frame to recognize the current position with the absolute position when the absolute position is within a predetermined range as the comparison result.

The reason why the BRIEF binary descriptor is used to recognize a space in the exemplary embodiment of the present invention is because an operating speed is much faster than that of descriptors which are used in the related art, such as SIFT or SURF.

The position recognizing unit 131 receives the stereo image from the wide angle camera 110 to obtain first odometry information through a visual odometry based on the input stereo image and receives inertial information from the IMU 120 to obtain second odometry information through an internal odometry based on the input inertial information.

In this case, the position recognizing unit 131 extracts a feature point from the stereo image to trace the extracted feature point and obtains the odometry information using the traced feature point.

Generally, the feature point which is extracted during a preprocessing process is a corner. However, it is difficult to obtain a sufficient amount of feature points in a region where there is no texture, such as a hallway or a large office space.

In order to solve the above-mentioned problem, the position recognizing unit 131 performs stereo matching on an edge. That is, the position recognizing unit 131 extracts an edge from the stereo image and performs sparse stereo matching on the extracted edge.

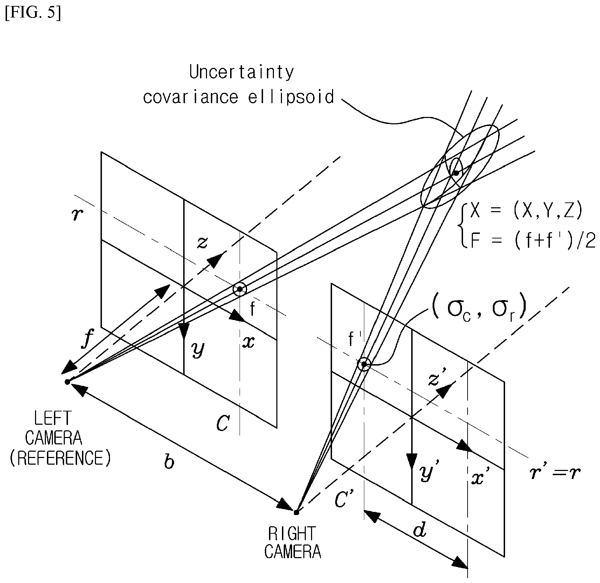

FIG. 5 is a view illustrating uncertainty of a three-dimensional point according to an exemplary embodiment of the present invention.

As illustrated in FIG. 5, the position recognizing unit 131 sets the uncertainty $\sigma$ according to a depth value obtained by a result of stereo matching and stores the uncertainty $\sigma$ in the DB. In the case of a wide angle camera, a focal length is very short so that the resolution is low. Therefore, the reliability of the obtained depth value is low so that the update is performed later.

The uncertainty of the three-dimensional point obtained using two wide angle cameras is represented by Equation 1.

[Equation 1]

$$\Sigma = \begin{bmatrix} \sigma_X^2 & \sigma_{XY} & \sigma_{XZ} \\ \sigma_{XY} & \sigma_Y^2 & \sigma_{YZ} \\ \sigma_{XY} & \sigma_{YZ} & \sigma_Z^2 \end{bmatrix} = \begin{bmatrix} \dfrac{b^2\sigma_c^2}{d^2}+\dfrac{b^2(c-c_0)\,\sigma_d^2}{d^4} & \dfrac{(c-c_0)b^2\sigma_d^2(r-r_0)}{d^4} & \dfrac{(c-c_0)b^2\sigma_d^2 f}{d^4} \\ \dfrac{(c-c_0)b^2\sigma_d^2(r-r_0)}{d^4} & \dfrac{b^2\sigma_r^2}{d^2}+\dfrac{b^2(r-r_0)\,\sigma_d^2}{d^4} & \dfrac{(r-r_0)b^2\sigma_d^2 f}{d^4} \\ \dfrac{(c-c_0)b^2\sigma_d^2 f}{d^4} & \dfrac{(r-r_0)b^2\sigma_d^2 f}{d^4} & \dfrac{f^2 b^2\sigma_d^2}{d^4} \end{bmatrix}$$

Here,

$$\begin{pmatrix} \sigma_X^2 & \sigma_{XY} & \sigma_{XZ} \\ \sigma_{XY} & \sigma_Y^2 & \sigma_{YZ} \\ \sigma_{XY} & \sigma_{YZ} & \sigma_Z^2 \end{pmatrix}$$

indicates an uncertainty covariance ellipsoid and b indicates a distance between cameras, x, y, z indicate a coordinate system of the left image camera and x', y', z' indicates a coordinate system of the right image camera. (c, r) and (c', r') indicate coordinates of matching pixels in the left camera and the right camera, f and f indicate focal distances of the left camera and the right camera. $\sigma_r$, $\sigma_c$ represents the uncertainty when the feature point is extracted as axes and ro and $c_0$ represent the optical axis of the camera by a camera coordinate system. Further, d is a difference generated when the feature point is projected to the left side and the right side and generally referred to as a disparity.

At a time when it is determined that the mobile robot moves a predetermined distance, pixels which are stored in the key frame are projected to the current image to find the most similar pixel and update the depth value. The update may be performed by applying a general Bayesian rule.

In this case, erroneous information is input due to various variables, specifically, a moving obstacle or a block while the mobile robot is moving and thus a depth value obtained based on erroneous information may have an outlier.

In order to solve the above-mentioned problem, when the obtained depth value is within $1\Sigma$, a variable "no_success" is increased by one and when the obtained depth value is larger than $1\Sigma$, the variable "no_failure" is increased by one. Thereafter, only when the reliability no_success/(no_success + no_failure) is larger than a specific value, the depth value is used to recognize the position.

The Bayesian rule which is used to update the depth value is represented by Equation 2.

[Equation 2]

$$\mu = \left[\sigma_{Z_2}^2/(\sigma_{Z_1}^2 + \sigma_{Z_2}^2)\right]\mu_{Z_1} + \left[\sigma_{Z_1}^2/(\sigma_{Z_1}^2 + \sigma_{Z_2}^2)\right]\mu_{Z_2}$$

$$1/\sigma^2 = (1/\sigma_{Z_1}^2) + (1/\sigma_{Z_2}^2)$$

Here, even though the updating process of the depth value z has been described, the x-value and the y-value vary depending on z. Therefore, x, y, and z are updated so that the position is figured out and the updated x, y, z are used to figure the position of the camera in the other way.

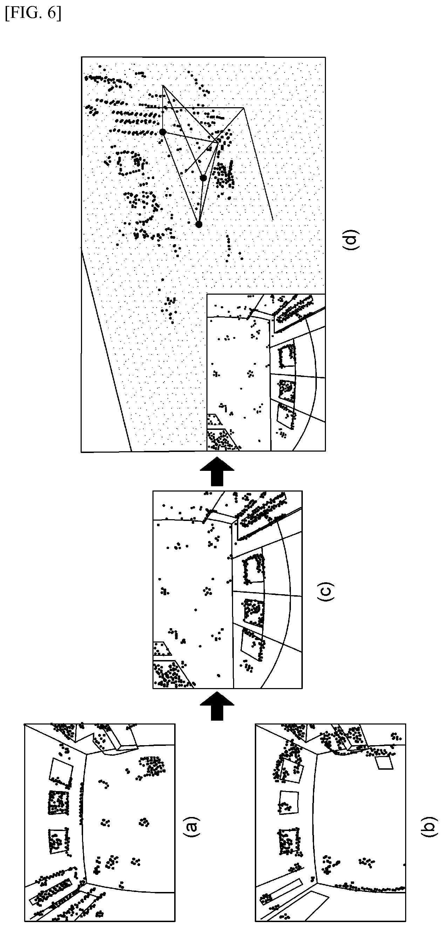

FIG. 6 is a view illustrating three-dimensional information on an edge according to an exemplary embodiment of the present invention. FIG. 6(a) is an image representing a depth value which is projected to the left image camera, FIG. 6(b) is an image representing a depth value which is projected to the right image camera, FIG. 6(c) is an image representing a depth value obtained through the updating process, and FIG. 6(d) is an image representing projection to a matching point and a depth value.

As illustrated in FIG. 6, it is understood that when the depth value is repeatedly updated, the three-dimensional information on the edge may be consistently obtained.

The information of the IMU is very important in a situation where it is difficult to recognize the environment by the camera. However, in cheap IMUs, bias is significantly deformed or hardly estimated. In order to solve the above-mentioned problem, the bias is obtained by stopping the robot for a moment and taking an average. In this case, the user may think that the mobile robot is not intelligent and the working speed is lowered.

In order to solve the above-mentioned problem, the position recognizing unit 131 updates the bias during the movement.

It is assumed that $\theta_g$ is an angular velocity obtained by a gyro sensor and $\theta_c$ is an angular velocity obtained by a wide angle stereo vision. However, an error may be incurred between angular velocities due to the bias while the mobile robot is moving. The error $\theta_e$ may be defined by Equation 3.

[Equation 3]

$$\theta_e = \theta_g - \theta_c$$

In this case, $\theta_e$ may be a bias. When speedy rotation or disturbance is generated, the bias is updated by applying Bayesian rule as represented by Equation 4.

[Equation 4]

$$\text{If, } |\theta| < \text{threshold}_{moving}, \ \mu_n = \theta_e, \ \sigma^2 = 1\text{deg/sec} \times 0.1\text{deg/sec}$$

When the mobile robot may stop during the movement, the bias is updated as represented by Equation 5.

[Equation 5]

$$\text{If, } |\theta| < \text{threshold}_{stop}, \ \mu_n = \theta_e, \ \sigma^2 = 0.1\text{deg/sec} \times 0.1\text{deg/sec}$$

Since the bias is corrected in real time by the above-described update process, even when the camera cannot be used momentarily, the odometry information using the IMU may maintain a predetermined level of accuracy using the optimal bias.

The position recognizing unit 131 estimates current state information, for example, a pose or a position based on one odometry information selected from first odometry information and second odometry information.

The position recognizing unit 131 may predict the current position using a predetermined number of adjacent key frames among the previously stored key frame set based on the state information estimated as described above. Here, the key frame may include state information of the mobile robot which is periodically measured.

The state determining unit 132 estimates three-dimensional angle information of the mobile robot using the angular velocity information of the three axes collected by the gyro sensor 121.

For example, the state determining unit 132 integrates an x-axis angular velocity, a y-axis angular velocity, and a z-axis angular velocity obtained by the gyro sensor 121 to estimate the three-dimensional angle information of the mobile robot using the integration result.

However, the three-dimensional angle information which is estimated by the state determining unit 132 using the information collected by the gyro sensor 121 has lots of noises and various error components. That is, it is highly likely that the estimated three-dimensional angle information is not accurate due to the drift of the gyro sensor 121.

Therefore, the state determining unit 132 filters the three-dimensional angle information estimated using the acceleration information of the three axes collected by the acceleration sensor 122 to a three-dimensional angle which is applicable to the mobile robot.

Specifically, since the gravitational acceleration is significantly larger than an acceleration by the movement, in the acceleration information collected by the acceleration sensor 122, an acceleration direction obtained using an output of the acceleration sensor 122 may be a gravitational direction. That is, when the information collected by the acceleration sensor 122 is used, the angle may be easily estimated.

However, when the noise due to a motion of the mobile robot is significant or external force such as collision is present, an impact which is equal to or larger than the gravitational acceleration is transmitted for a moment so that it is difficult to estimate the angle using the information collected by the acceleration sensor 122.

Therefore, the state determining unit 132 may correct the three-dimensional angle information of the mobile robot which is estimated using the acceleration information collected by the gyro sensor 121 using the acceleration information collected by the acceleration sensor 122.

Specifically, the state determining unit 132 collects a drift problem which is a cause of inaccuracy of the three-dimensional angle information estimated using the information collected by the gyro sensor 121, using a value of the acceleration sensor 122 when the mobile robot stops or the motion of the mobile robot is constant.

Further, when the information of the acceleration sensor 122 has a lots of noises, the state determining unit 132 integrates the output of the gyro sensor 121 to obtain three-dimensional information as the integration result.

That is, the state determining unit 132 appropriately combines the information collected by the gyro sensor 121 of the three axes and the acceleration sensor 122 of the three axes to obtain angles in the x-axis, the y-axis, and the z-axis. When the state determining unit 132 appropriately combines the information collected by the gyro sensor 121 and the acceleration sensor 122, it is possible to select a type of sensor to be used and an appropriate weighted value if necessary. When the state determining unit 132 sets the weighted value to perform filtering in order to appropriately combine the information, a Kalman filter may be used.

Further, the state determining unit 132 repeatedly performs processes of estimating the three-dimensional angle of the mobile robot using the information collected by the gyro sensor 121 and filtering the three-dimensional angle using the information collected by the acceleration sensor 122 to improve accuracy of the obtained three-dimensional angle information.

The state determining unit 132 determines the pose, the operation state, a movement state of the mobile robot and whether to correct the position recognition using the previously obtained three-dimensional angle information of the mobile robot.

The movement control unit 133 controls the mobile robot based on the position estimated by the position recognizing unit 131 and the state of the mobile robot determined by the state determining unit 132.

For example, when the obtained three-dimensional angle of the mobile robot is consistently maintained at a specific angle, the movement control unit 133 determines that the mobile robot is confined in a slope.

In a case of a cleaning robot which is an example of the mobile robot, when the cleaning robot is stuck in a location such as a fan or a high threshold during the movement, wheels of the cleaning robot spin with no traction. When the wheels spin with no traction, the cleaning robot may easily lose its location. When the cleaning robot is stuck in the location such as the fan or the high threshold, the previously obtained three-dimensional angle of the cleaning robot may be higher than that in a normal movement state. When the previously obtained three-dimensional angle of the cleaning robot is higher than a predetermined angle $\theta 1$ and this state is maintained for a predetermined time T1 or longer, the state determining unit 132 estimates that the cleaning robot is confined in a location such as a fan or a high threshold. The predetermined angle $\theta 1$ may be set to be 8 degrees and the predetermined time T1 may be set to be 0.5 seconds. The predetermined angle $\theta 1$ or the predetermined time T1 may vary depending on a type or a characteristic of the cleaning robot, a setting of a user, or a system environment. Further, even though the cleaning robot is exemplified, all mobile robots which may be stuck to be confined in a location such as a high threshold are applicable.

When it is estimated that the mobile robot is confined in the slope, the movement control unit 133 may perform an operation to avoid the confinement of the slope. In this case, an operation to avoid the confinement of the slope which is performed by the movement control unit 133 may be set in advance or a known method of escaping from the confinement of the slope may be used.

Further, when the three-dimensional angle of the mobile robot is sharply changed or is equal to or larger than a predetermined angle $\theta 2$, the state determining unit 132 may determine that the mobile robot is in a state to cross over the obstacle such as the threshold.

As an example, many of cleaning robots include a floor sensor which measures a distance between the cleaning robot and a floor. When a distance measured by the floor sensor is equal to or larger than a predetermined distance L1, the cleaning robot recognizes that there is a cliff in a traveling direction to perform an avoidance operation to backwardly move or turn a direction. The predetermined distance L1 is set to be approximately 4 cm, but it may vary depending on an appearance of the cleaning robot, the characteristic of the cleaning robot, or a performance of the cleaning robot. Further, the predetermined distance L1 may not be set to be too low, because a part of the cleaning robot may be lifted while crossing over the threshold.

Even though the distance measured by the floor sensor is equal to or larger than the predetermined distance L1, when a predetermined three-dimensional gradient of the cleaning robot is equal to or larger than the predetermined angle $\theta 2$, the state determining unit 132 may determine that the cleaning robot is in a state to cross over the obstacle such as the threshold.

That is, the state determining unit 132 considers that a front part of the cleaning robot is lifted to cross over the obstacle such as the threshold, not because there is a cliff in the traveling direction of the cleaning robot, so that the value measured by the floor sensor is increased, the state determining unit 132 estimates that the cleaning robot is in a state to cross over the obstacle such as the threshold. The predetermined angle $\theta 2$ may vary depending on the appearance of the cleaning robot, the characteristic of the cleaning robot, a threshold overcome ability of the cleaning robot, and the characteristic of a cleaning space and may be set to be approximately 8 degrees.

Similarly, even though the three-dimensional angle of the mobile robot is sharply changed, the state determining unit 132 determines that the cleaning robot is in a state to cross over the obstacle such as the threshold. How much the three-dimensional angle is changed may be set in advance, but may vary depending on the appearance of the cleaning robot, the characteristic of the cleaning robot, the threshold overcome ability of the cleaning robot, and the characteristic of the cleaning space.

When it is classified that the cleaning robot is in a state to cross over the obstacle such as the threshold, even though the value measured by the floor sensor exceeds a reference which determines whether there is a cliff, the movement control unit 133 may ignore the information of the floor sensor for a while so as not to perform the cliff avoidance operation but control the cleaning robot to cross over the obstacle such as the threshold. The time T2 may be set to be approximately 0.5 seconds but may vary depending on the appearance of the cleaning robot, the characteristic of the cleaning robot, a threshold overcome ability of the cleaning robot, and the characteristic of the cleaning space.

That is, the state determining unit 132 distinguishes the value of the floor sensor due to the presence of the cliff or a value of the floor sensor generated when the front side of the mobile robot is lifted to cross over the obstacle such as the threshold using the three-dimensional angle information and thus determines the current pose or the current operation state of the mobile robot.

The movement control unit 133 may perform an operation of avoiding the cliff or control to cross over the obstacle such as the threshold, in accordance with the estimation. As a specific method of an operation of the movement control unit 133 to avoid the cliff, a known technique may be used.

Further, as described above, when it is determined that the mobile robot is in a state to cross over the obstacle such as the threshold, the movement control unit 133 ignores the value measured by the floor sensor for a while (for example, approximately 0.5 seconds or 1 second) to allow the mobile robot to cross over the threshold without performing the operation to avoid the cliff.

Here, the cliff refers to a location where when the mobile robot such as the cleaning robot falls, the mobile robot may be damaged and may include high stairs.

The state determining unit 132 distinguishes that the high measurement value of the floor sensor is caused by the presence of the cliff or a tilted mobile robot while crossing over the obstacle such as the threshold and the movement control unit 133 controls the mobile robot in accordance with the distinguished result so that the mobile robot may easily cross over the obstacle such as the threshold and a height of the obstacle such as the threshold which is crossed by the mobile robot may be increased.

When it is discovered that the mobile robot is tilted to a side direction during movement, the state determining unit 132 may determine that the position recognizing unit of the mobile robot is erroneously operated. The position recognizing unit recognizes the position of the mobile robot. Specifically the position recognizing unit photographs the ceiling to analyze feature points from the photographed image to recognize the position of the mobile robot.

Specifically, when the previously obtained three-dimensional angle of the mobile robot is inclined to any one axis while the mobile robot moves, the state determining unit 132 may determine that there is an error in the position recognition of the mobile robot.

As an example, the cleaning robot has a sensor such as a camera which is provided in an upper portion of the cleaning robot and the position recognizing unit of the cleaning robot may recognize the cleaning robot using information obtained by photographing the ceiling by a sensor such as a camera and analyzing the photographed image.

However, when the cleaning robot moves with a wheel laid on an edge of a carpet or the threshold, the cleaning robot may be tilted. When the cleaning robot is tilted, a result of recognizing the position of the cleaning robot using the information obtained by photographing the ceiling by a sensor such as a camera which is provided at an upper portion of the cleaning robot and analyzing the photographed image may have an error.

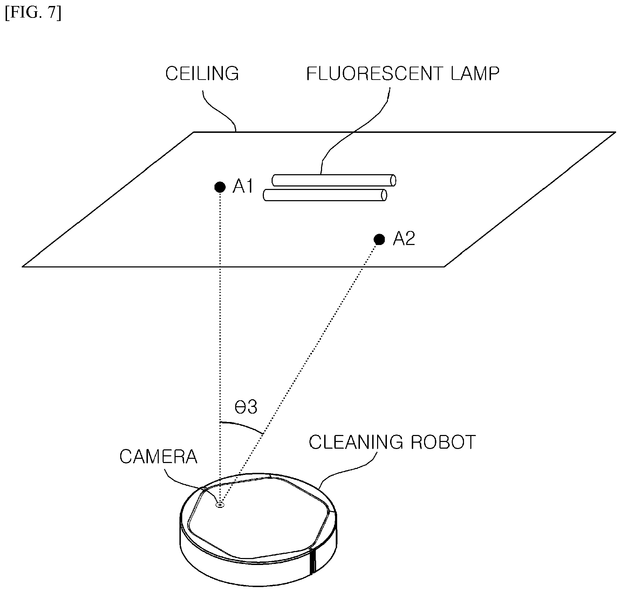

FIG. 7 is a view illustrating a position recognizing error incurred when a mobile robot is tilted.

As illustrated in FIG. 7, when the cleaning robot is tilted, the camera provided at the upper portion of the cleaning robot does not photograph the ceiling in a vertical direction, but photographs the ceiling in an inclined direction so that a large error may be incurred. The error may be increased as the height of the ceiling is increased. That is, a position of the ceiling recognized by the camera when the cleaning robot is not tilted but is horizontal is A and the position of the cleaning robot is recognized using the point A1. However, when the cleaning robot is tilted at $\theta3$, the camera mounted in the cleaning robot is also tilted, so that the point A2 may be recognized. When the position recognizing unit recognizes the position of the cleaning robot using the point A2, an error may be incurred. The error is corrected using $\theta3$ and $\theta3$ is obtained by the state determining unit 132 according to the exemplary embodiment of the present invention.

Therefore, when a previously obtained three-dimensional gradient of the cleaning robot is tilted at one side or the tilted state is maintained for a predetermined time or longer, the state determining unit 132 may determine that there may be an error incurred in position recognition of the cleaning robot.

When the state determining unit 132 determines that there may be an error incurred in the position recognition of the cleaning robot, the movement control unit 133 may correct the position recognized by the position recognizing unit of the cleaning robot using the previously obtained three-dimensional gradient of the cleaning robot. In this case, the movement control unit 133 may correct the position of the cleaning robot using a trigonometric function.

The state determining unit 132 may determine various states of the mobile robot using three-dimensional angle information in addition to the above-mentioned situation and the movement control unit 133 may perform control appropriate for the state determined as described above.

For example, when the three-dimensional angle is twisted for a predetermined time or longer and it is determined that avoidance is required, the movement control unit 133 controls the mobile robot to perform an avoidance operation.

Further, in the case of the mobile robot which generally moves on a plane, the position may be recognized with five degrees of freedom including x, y, roll, pitch, and yaw. In the case of position recognition of six degrees of freedom, complexity of the position recognizing unit is increased so that it is not appropriate for a system having a limitation of a computing amount such as an embedded system. The mobile robot according to the exemplary embodiment of the present invention may replace roll and pitch information among five degrees of freedom with estimated angle information and may more accurately recognize the position. Further, according to the exemplary embodiment of the present invention, even though the mobile robot is tilted, accurate position recognition may be allowed.

When accuracy of a yaw angle output of the gyro sensor 121 is lowered, a yaw estimating unit (not illustrated) may estimate a yaw angle using previously obtained three-dimensional angle information.

Specifically, when an error is generated in the mobile robot, there is a user's manipulation to re-insert a wet cloth into the cleaning robot, or the mobile robot moves while being tilted, accuracy of the yaw angle output of the gyro sensor 121 is lowered. When the accuracy of the yaw angle output is lowered, the yaw estimating unit estimates the yaw angle using recently obtained three-dimensional angle information. When the yaw estimating unit estimates the yaw angle using recently obtained three-dimensional angle information, it helps to quickly and accurately recognize the position when the mobile robot re-operates and further helps to generate accurate information of various devices using the yaw angle information and to improve the control of various devices using the yaw angle information.

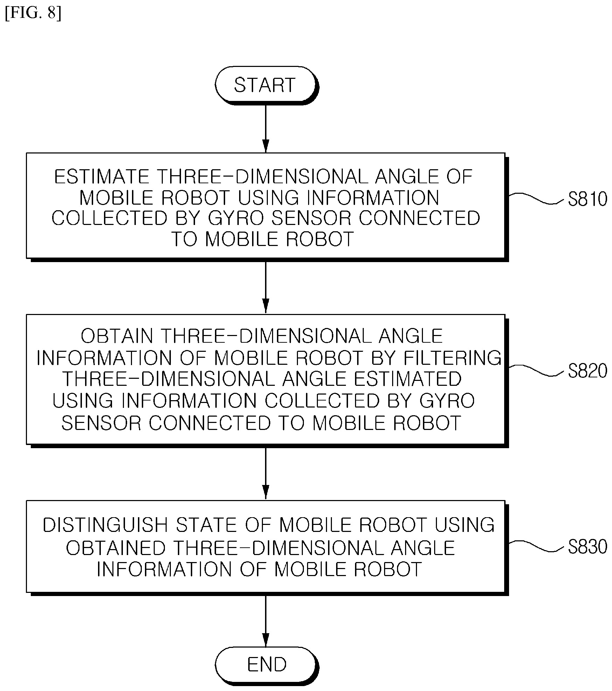

FIG. 8 is a view illustrating a method of determining a state of a mobile robot according to an exemplary embodiment of the present invention.

As illustrated in FIG. 8, the state determining unit 132 according to the exemplary embodiment of the present invention estimates a three-dimensional angle of the mobile robot using information collected by the gyro sensor 121 which is connected to the mobile robot in step S810.

Next, the state determining unit 132 obtains the three-dimensional angle information of the mobile robot by filtering the three-dimensional angle estimated using information collected in the acceleration sensor 122 connected to the mobile robot in step S820.

In this case, the state determining unit 132 repeats the processes of estimating the three-dimensional angle to obtain the three-dimensional information (S810 and S820) at least two times to obtain more accurate three-dimensional angle information of the mobile robot.

Next, the state determining unit 132 determines the state of the mobile robot using the previously obtained three-dimensional angle information of the mobile robot in step S830.

In this case, the state of the mobile robot is a pose of the mobile robot, whether to correct the position recognition of the mobile robot, a slope confinement state of the mobile robot, an operation state of the mobile robot, a movement state of the mobile robot.

Thereafter, the movement control unit 133 controls the movement of the mobile robot based on the determined state of the mobile robot.

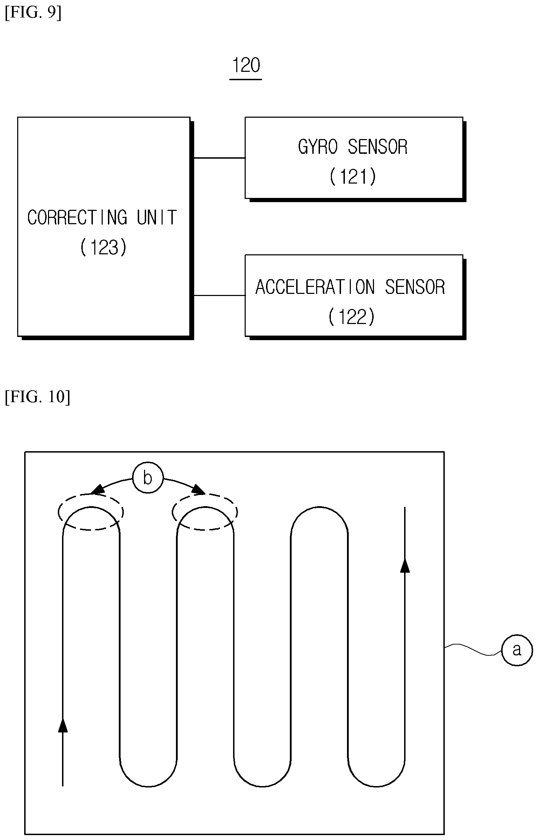

FIG. 9 is a view illustrating a detailed configuration of an IMU according to another exemplary embodiment of the present invention.

As illustrated in FIG. 1, an IMU 120 according to another exemplary embodiment of the present invention further includes a correcting unit 123 in addition to the components of the IMU 120 according to the exemplary embodiment of the present invention which has been described with reference to FIG. 1.

Here, the correcting unit 123 may correct a bias value of the acceleration sensor 122.

The correcting unit 123 is added so that the present invention may be used in various environments. For example, when a predetermined bias value of the acceleration sensor 122 is changed due to various reasons such as a temperature or an operation time, the correcting unit 123 corrects the bias value during the operation of the mobile robot. Accordingly, according to the present invention, the state may be more accurately determined and the mobile robot may be more accurately controlled.

The bias value of the acceleration sensor 122 may be set in advance. The predetermined bias value of the acceleration sensor 122 may have an error due to various reasons such as a characteristic, a temperature, or an operation time of a chip installed in the sensor.

In the case of the triaxial acceleration sensor 122, when the mobile robot to which the acceleration sensor 122 is connected stops, only gravitational acceleration remains. Therefore, a magnitude of the acceleration is a value of the gravitational acceleration (1G). That is, when an x-axis acceleration is $a_x$, a y-axis acceleration is ay, and a z-axis acceleration is $a_z$, a magnitude A of the acceleration measured by the triaxial acceleration sensor 120 is $\sqrt{a_x^2 + a_y^2 + a_z^2}$ and A needs to be 9.8 m/s$^2$ which is the gravitational acceleration (1G). However, A may have a different value from the gravitational acceleration (1G) due to a bias error of the acceleration sensor 120.

When the bias error of the acceleration sensor 122 is not corrected, an error may be incurred in the previously obtained three-dimensional angle information and there may be a problem to control the mobile robot such as a cleaning robot.

In order to solve the above-mentioned problem, the correcting unit 123 may correct the bias value of the acceleration sensor 122 during operation of the mobile robot. That is, the correcting unit 123 may correct the bias value by distinguishing a case when the mobile robot moves and a case when the mobile robot does not move.

For example, a process of correcting the bias value by the correcting unit 123 when the mobile robot moves will be described below.

When the mobile robot moves straight on the plane, the acceleration sensor 122 may output values whose average is constant in spite of a standard deviation. The correcting unit 123 applies the average to each axis output of the gyro sensor 121. The average may refer an average of output values for latest one to five seconds of the acceleration sensor 122 while the mobile robot moves straight on the plane. One to five seconds may vary depending on the characteristic of the acceleration sensor 12, a type of the acceleration sensor 122, a setting of a user, or a setting environment of the mobile robot.

In the case of the triaxial gyro sensor 121, axes of the gyro sensor 121 is x, y, and z axes and thus the correcting unit 123 applies the average to outputs of the x, y, and z axes of the gyro sensor 121.

When the recent angular velocity measured by the gyro sensor 121 is equal to or higher than a predetermined reference, the correcting unit 123 re-performs the process of calculating the average. When the recent angular velocity measured by the gyro sensor 121 is equal to or higher than the predetermined reference Vw, the reason why the correcting unit 123 re-performs the process of calculating the average is to determine whether movement components included in output data are many or small.

That is, when the robot does not move or has only one acceleration component, or the standard deviation is low. When the standard deviation is approximately 0.1 deg/sec or lower, it is determined that the mobile robot stops or slowly moves. That is, only when the movement component of data to be output is small, the correcting unit 123 applies the average to the output of each axis of the gyro sensor 121. The reason why the correcting unit 123 applies the average to the output of each axis of the gyro sensor 121 only when the movement component of data to be output is small is to improve reliability of the bias correction. Here, the predetermined reference Vw may be approximately 0.05 g, but may vary depending on various reasons such as a performance of the mobile robot, a purpose of the mobile robot, and a performance of the sensor.

The correcting unit 123 may correct an average of the x axis and an average of the y axis among averages of the axes with the bias. Further, the correcting unit 123 may set the average of the z axis among the averages of axes as the gravitational acceleration (1G). Whenever the gravitational acceleration 1G is set, the gravitational acceleration may have different values, but may be set to be 9.8 m/s$^2$.

That is, the correcting unit 123 determines whether the mobile robot stops using the movement average of the gyro sensor 121 and the movement average of the gyro sensor 122 may be used to correct the bias.

As another example, a process of collecting information for correcting a bias value of the acceleration sensor 122 by the correcting unit 123 when the mobile robot does not move will be described below.

Even when the mobile robot does not move, the correcting unit 123 may correct the bias value of the acceleration sensor 122 similarly to the example when the mobile robot moves.

To this end, control to intentionally stop the mobile robot for approximately 0.5 to 1 seconds while the mobile robot operates may be set. The time of 0.5 second to 1 second may vary depending on a type or a purpose of the mobile robot, a performance of the mobile robot, a performance of the acceleration sensor 122, a characteristic of the acceleration sensor 122, or a control algorithm of the mobile robot. Further, the control may be set to intentionally stop the mobile robot while the mobile robot operates by setting the mobile robot to periodically or unperiodically stop or setting the mobile robot to stop only under a specific operation condition. The setting process will be described with respect to the cleaning robot which is an example of the mobile robot.

FIG. 10 is a view illustrating an example which sets a cleaning robot to intentionally stop while the cleaning robot operates.

As illustrated in FIG. 10, a cleaning route of the cleaning robot for cleaning a room is generally represented by a curved line ⓐ. During the curved cleaning route, a circled section ⓑ represented by a circle where the cleaning robot turns a direction is generated and the cleaning robot may be controlled or set to stop for a predetermined time in the section ⓑ.

As another example, a process of correcting the bias value of the acceleration sensor 122 by the correcting unit 123 when the mobile robot stops for a predetermined time will be described below.

The correcting unit 123 may obtain an acceleration output value while the mobile robot stops. That is, only when the wheels of the mobile robot stop, there is no additional input from the use, an angular velocity output of the gyro sensor 121 is equal to or lower than a predetermined reference Vw, the correcting unit 123 calculates an average.

When the mobile robot does not move, the correcting unit 123 may correct an average of the x axis and an average of the y axis among averages of the axes with the bias. Further, the correcting unit 123 may set the average of the z axis among the averages of axes as the gravitational acceleration (1G).

The correcting unit 150 may use all averages of the axes calculated when the mobile robot moves and when the mobile robot does not moves to correct the bias.

A reliability of the average calculated when the mobile robot does not move is higher than a reliability of the average calculated when the mobile robot moves. Therefore, the correcting unit 123 sets a weighted value of the average calculated when the mobile robot does not move to be higher than a weighted value of the average calculated when the mobile robot moves to correct the bias.

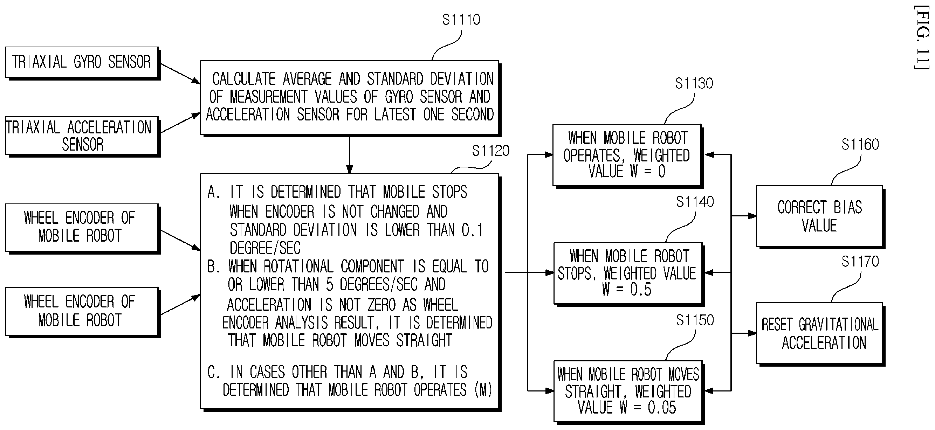

FIG. 11 is a view illustrating a bias correcting process according to an exemplary embodiment of the present invention.

As illustrated in FIG. 11, the correcting unit according to an exemplary embodiment of the present invention may obtain an average Avg and a standard deviation Dev of the sensor measurement values for latest one second from the triaxial gyro sensor 121 and the triaxial acceleration sensor 122 in step S1110.

Next, the correcting unit 123 obtains a wheel encoder of the mobile robot and recent wheel speed command information and determines whether the mobile robot moves using the obtained wheel encoder, the recent wheel speed command, an average Avg of the sensor measurement values, and the standard deviation Dev of the sensor measurement values in step S1120.

For example, when the encoder is not changed and the standard deviation Dev is lower than 0.1 degree/sec, the correcting unit 123 determines that the mobile robot stops. Further, when a rotational component of the wheel encoder is equal to or lower than 5 degrees/sec and the acceleration is not zero, the correcting unit 123 may determine that the mobile robot moves straight. Further, in the other cases excepting the case when it is determined that the mobile robot stops or moves straight, the correcting unit 123 does not distinguish a specific operation but may determine that the mobile robot operates (M). The state M when the mobile robot operates refers to a state when the mobile robot performs another operation such as rotation, other than the operation stop or straight movement of the mobile robot. For example, the numerical values such as one second, 0.1 degree/sec, or 5 degrees/sec may vary depending on various reasons such as the type of the mobile robot, a system environment of the mobile robot, a purpose of the mobile robot, or a performance of the mobile robot.

Next, the correcting unit 123 may set different weighted values s depending on the state M when the mobile stops, moves straight, or operates.

For example, when the mobile robot operates (M), the correcting unit 123 set the weighted value w to be zero in step S1130. Further, when the mobile robot stops, the correcting unit 123 set the weighted value w to be 0.5 in step S1140. Further, when the mobile robot moves straight, the correcting unit 123 set the weighted value w to be 0.05 in step S1150.

Next, the correcting unit 123 corrects the acceleration bias value using the average, the standard deviation, and a predetermined weighted value of the measurement values of the gyro sensor 121 and the acceleration sensor 122 in step S1160.

In this case, the correcting unit 123 may correct the bias value using Equation 6.

[Equation 6]

$$Bnew = Bold \times (1-w) + Avg \times w$$

In Equation 6, Bnew is a corrected bias value, Bold is a bias value before being corrected, w is a weighted value, and Avg is an average of the sensor measurement values.

Further, the correcting unit 123 may reset the average of the z axis as the gravitational acceleration (1G).

The obstacle sensing unit 140 receives the stereo image from the wide angle camera 110 to extract a predetermined number of horizontal lines in the received stereo image. Here, the predetermined number is at least two and desirably three.

The obstacle sensing unit 140 performs dense stereo matching along the extracted horizontal line to obtain distance information to the obstacle as the result.

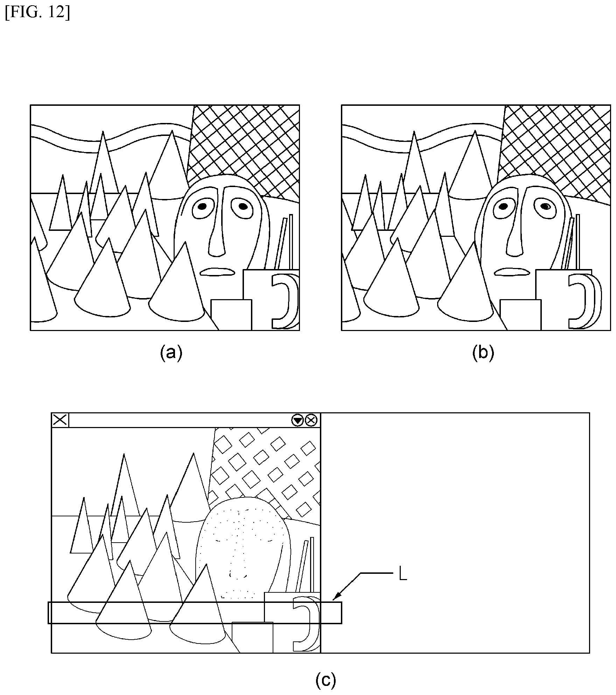

FIG. 12 is a view illustrating an obstacle sensing process according to an exemplary embodiment of the present invention.

As illustrated in FIG. 12, the obstacle sensing unit 140 performs highly dense stereo matching based on the received left and right stereo images as illustrated in FIGS. 12(a) and 12(b) to calculate a depth value as the result. Here, in the image of FIG. 12(c), the depth value calculated as described above is represented by gray scales. Further, FIG. 12(c) illustrates a linear region L which is used to sense the obstacle.

In this case, since the depth value for the entire region cannot be calculated by a mobile robot mounted with a small-size processor, in the exemplary embodiment of the present invention, a depth value is extracted only from a partial region.

The map creating unit 150 is provided with current position information which is estimated by the position recognizing unit 130, reconstructs a pose graph based on position information, and updates the previously stored key frame set based on the reconstructed pose graph.

The DB 160 stores the key frame set generated in accordance with movement of the mobile robot.

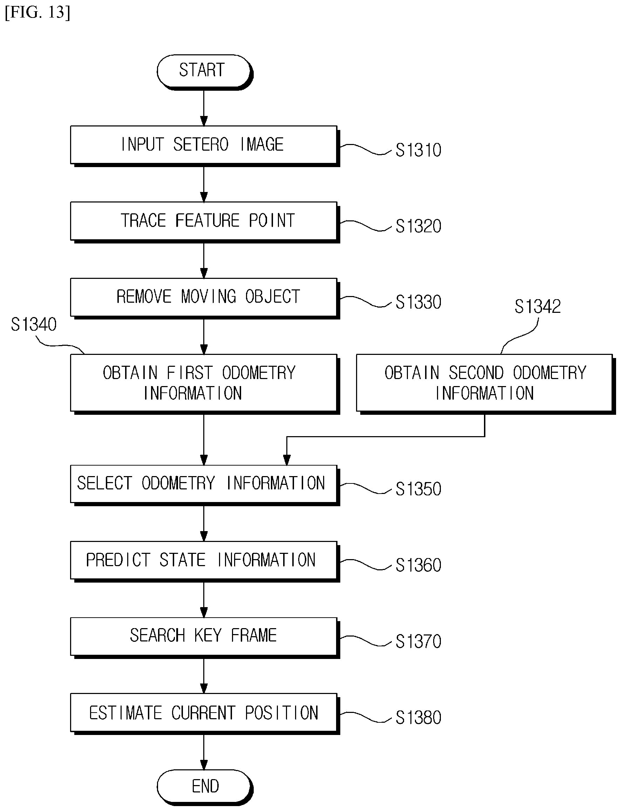

FIG. 13 is a view illustrating a method for recognizing a position of a mobile robot according to an exemplary embodiment of the present invention.

As illustrated in FIG. 13, an apparatus for recognizing the position of the mobile robot (hereinafter, referred to as a position recognizing apparatus) according to an exemplary embodiment of the present invention receives a stereo image from the wide angle camera in step S1310, extracts a feature point from the input stereo image and consistently traces the extracted feature point in the unit of frame in step S1320.

Next, the position recognizing apparatus may remove a moving object in the stereo image in step S1330.

For example, the position recognizing apparatus compares the current frame and the last n-th frame to remove an inconsistent feature which may be determined as a moving object as the comparison result.

Next, the position recognizing apparatus performs visual odometry based on the traced feature point to obtain first odometry information as the result in step S1340 and obtain second odometry information through inertial information based internal odometry in step S1342.

Next, the position recognizing apparatus selects one odometry information between obtained first odometry information and second odometry information in step S1350 and predicts state information using the selected odometry information and pose information in step S1360.

In this case, the position recognizing apparatus selects the first odometry information when the first odometry information satisfies a predetermined condition and selects the second odometry information when the first odometry information does not satisfy the predetermined condition.

Here, when it is determined whether the predetermined condition is satisfied, it is determined that the odometry information, for example, a change rate of the position information is within a predetermined threshold value.

Next, the position recognizing apparatus searches at least one key frame among the previously stored key frame set based on the predicted state information in step S1370 and estimates the current position using at least one searched key frame in step S1380.

In this case, the position may be accurately estimated as the number of adjacent key frames is large.

The position recognizing apparatus according to the exemplary embodiment may be applied to autonomous cleaning robot or service robot. For example, the cleaning robot autonomously moves in an indoor environment or an outdoor environment. When the cleaning robot moves, the cleaning robot meets various obstacles such as a wall, a guardrail, a desk, or furniture and the autonomous cleaning robot determines a moving route using the position of the robot in the cleaning area and the position of the obstacle and moves along the moving route. According to the exemplary embodiment, the autonomous cleaning robot includes the stereo camera, specifically, a wide angle stereo camera as an image capturing unit to obtain an external image. By doing this, the autonomous cleaning robot estimates its own position, determines the moving route, and moves using information on the external environment obtained thereby, specifically, using the feature point related to an edge.

Specifically, in the case of the cleaning robot which autonomously moves based on simultaneous localization and map-building (SLAM), the exemplary embodiment may be used to estimate its own position on the constructed lattice map, estimate a position of the obstacle, determine a movement route to avoid collision with the obstacle using the estimated position relationship or determine an optimal route.

In the exemplary embodiment, the odometry information may be data which is used to estimate the positional change of the mobile robot in accordance with the time. For example, the odometry information may be information obtained from a wheel mounted in the mobile robot or rotary encoders in a legged joint. The state information such as movement distance of the mobile robot or a number of rotations of the wheel may be calculated using the odometry information. Further, the space where the mobile robot is currently located may be understood through the state information so that the odometry information may be used to determine the key frame during the image processing.

The position recognizing method according to the exemplary embodiment of the present invention may be implemented as computer readable software and the software may be executed in a processor mounted in the autonomous cleaning robot.

Even though all components of the exemplary embodiment may be combined as one component or operates to be combined, the present invention is not limited to the exemplary embodiment. In other words, one or more of all of the components may be selectively combined to be operated within a scope of the present invention. Further, all of the components may be implemented as one independent hardware but a part or all of the components are selectively combined to be implemented as a computer program which includes a program module which performs a part or all of functions combined in one or plural hardwares. Further, such a computer program may be stored in a computer readable media such as a USB memory, a CD disk, or a flash memory to be read and executed by a computer to implement the exemplary embodiment of the present invention. The recording media of the computer program may include a magnetic recording medium, an optical recording medium, or a carrier wave medium.

The exemplary embodiments of the present invention which have been described above are examples and it is obvious to those skilled in the art that various changes or modifications may be made without departing from the spirit and scope of the present invention. Therefore, the exemplary embodiments of the present invention are provided for illustrative purposes only but not intended to limit the technical spirit of the present invention. The scope of the technical concept of the present invention is not limited thereto. The protective scope of the present invention should be construed based on the following claims, and all the technical concepts in the equivalent scope thereof should be construed as falling within the scope of the present invention.

**Claims**

1. An apparatus of controlling movement of a mobile robot, comprising:

   an inertial measurement unit (IMU) which obtains inertial information of a mobile robot;
   a position recognizing unit which predicts state information using one between first odometry information calculated based on at least one pair of stereo images obtained in the mobile robot and second odometry information calculated based on the inertial information and estimates a current position using the predicted state information and a previously stored key frame; and
   a movement control unit which controls movement of the mobile robot based on the estimated position.

2. The apparatus of claim 1, further comprising:

   two wide angle cameras which obtain the stereo images on a region of interest including a vertical direction and a horizontal direction in accordance with movement of a mobile robot,
   wherein the position recognizing unit reduces the received stereo images to have a predetermined size, encodes the reduced stereo images using a binary robust independent elementary features (BRIEF) binary descriptor to generate binary data as the encoding result, and compares the generated binary data generated and data indicating an absolute position of the mobile robot in the previously stored key frame to recognize the current position of the mobile robot with the absolute position as the comparison result.

3. The apparatus of claim 1, wherein the position recognizing unit selects the first odometry information when the first odometry information satisfies the predetermined condition and selects the second odometry information when the first odometry information does not satisfy the predetermined condition.

4. The apparatus of claim 1, wherein the position recognizing unit searches for a predetermined number of adjacent key frames among a previously stored key frame set based on the predicted state information and estimates the current position of the mobile robot using the predetermined number of searched adjacent key frames.

5. The apparatus of claim 1, further comprising:

   an obstacle sensing unit which extracts a predetermined number of horizontal lines in the received stereo image, performs stereo alignment along the extracted horizontal lines to obtain distance information to an obstacle as the result.

6. The apparatus of claim 1, further comprising:

   a map creating unit which reconstructs a pose graph based on current position information of the mobile robot and updates the previously stored key frame set based on the reconstructed pose graph.

7. The apparatus of claim 1, further comprising:

   a state determining unit which obtains a three-dimensional angle of the mobile robot based on the inertial information and determines a state of the mobile robot using the obtained three-dimensional angle of the mobile robot,
   wherein the movement control unit controls movement of the mobile robot based on the estimated position and the determined state.

8. The apparatus of claim 7, wherein when the obtained three-dimensional angle of the mobile robot is maintained at a specific angle for a predetermined time or longer, the state determining unit determines that the mobile robot is in a confinement state to be confined in a slope and when the obtained three-dimensional angle of the mobile robot is equal to or larger than the predetermined angle or is changed more than a predetermined changed amount, determines that the mobile robot is in an overcome state to cross over an obstacle.

9. The apparatus of claim 7, wherein when a three-dimensional angle of the mobile robot obtained during the movement of the mobile robot has a gradient in a side direction, the state determining unit determines to be an error state in which an error is incurred in position recognition of the mobile robot.

10. The apparatus of claim 1, wherein when the mobile robot operates at an angular velocity of a gyro sensor which is equal to or higher than a predetermined angular velocity during the operation of the mobile robot, the IMC calculates an average movement value of the mobile robot for every x-axis, y-axis, and z-axis and corrects a bias value of an acceleration sensor based on the calculated average movement value of the x-axis, the y-axis, and the z-axis.

11. A method of controlling movement of a mobile robot, comprising:

obtaining one pair of stereo images on a region of interest including a vertical direction and a horizontal direction in accordance with movement of a mobile robot, by two wide angle cameras;
obtaining inertial information of the mobile robot, by a inertial measurement unit (IMU);
predicting state information using one between first odometry information calculated based on at least one pair of stereo images and second odometry information calculated based on the inertial information and estimating a current position using the predicted state information and a previously stored key frame, by a position recognizing unit; and
controlling movement of the mobile robot based on the estimated position, by a movement control unit.

12. The method of claim 11, wherein in the estimating, the received stereo images are reduced to have a predetermined size, the reduced stereo images are encoded using a binary robust independent elementary features (BRIEF) binary descriptor to generate binary data as the encoding result, and the generated binary data generated is compared with data indicating an absolute position of the mobile robot in the previously stored key frame to recognize the current position of the mobile robot with the absolute position as the comparison result.

13. The method of claim 11, wherein in the estimating, the first odometry information is selected when the first odometry information satisfies the predetermined condition and the second odometry information is selected when the first odometry information does not satisfy the predetermined condition.

14. The method of claim 11, wherein in the estimating, a predetermined number of adjacent key frames is searched among a previously stored key frame set based on the predicted state information and the current position of the mobile robot is estimated using the predetermined number of searched adjacent key frames.

15. The method of claim 11, further comprising:

extracting a predetermined number of horizontal lines in the received stereo image and performing stereo alignment along the extracted horizontal lines to obtain distance information to an obstacle as the result, by an obstacle sensing unit.

16. The method of claim 11, further comprising:

reconstructing a pose graph based on current position information of the mobile robot and updating the previously stored key frame set based on the reconstructed pose graph, by a map creating unit.

17. The method of claim 11, further comprising:

obtaining a three-dimensional angle of the mobile robot based on the inertial information and determining a state of the mobile robot using the obtained three-dimensional angle of the mobile robot, by a state determining unit,
wherein in the controlling, movement of the mobile robot is controlled based on the estimated position and the determined state.

18. The method of claim 17, wherein in the determining, when the obtained three-dimensional angle of the mobile robot is maintained at a specific angle for a predetermined time or longer, it is determined that the mobile robot is in a confinement state to be confined in a slope and when the obtained three-dimensional angle of the mobile robot is equal to or larger than the predetermined angle or is changed more than a predetermined changed amount, it is determined that the mobile robot is in an overcome state to cross over an obstacle.

19. The method of claim 17, wherein in the determining, when a three-dimensional angle of the mobile robot obtained during the movement of the mobile robot has a gradient in a side direction, it is determined to be an error state in which an error is incurred in position recognition of the mobile robot.

20. The method of claim 11, wherein in the obtaining of inertial information, when the mobile robot operates at an angular velocity of a gyro sensor which is equal to or higher than a predetermined angular velocity during the operation of the mobile robot, an average movement value of the mobile robot is calculated for every x-axis, y-axis, and z-axis and a bias value of an acceleration sensor is corrected based on the calculated average movement value of the x-axis, the y-axis, and the z-axis.

[FIG. 1]

```
┌────────────────────────────┐     ┌──────────────────────┐
│                            │     │  OBSTACLE SENSING    │
│   WIDE ANGLE CAMERA        │     │       UNIT           │
│       (110)                │     │      (140)           │
│                            │     └──────────────────────┘
│                            │              │
└────────────────────────────┘     ┌──────────────────────┐     ┌──────────────┐
                                    │                      │     │              │
┌────────────────────────────┐     │   CONTROL UNIT       │     │     DB       │
│        IMU                 │     │      (130)           │     │    (160)     │
│       (120)                │     │                      │     │              │
│  ┌──────────────────────┐  │     │                      │     │              │
│  │   GYRO SENSOR        │  │     └──────────────────────┘     └──────────────┘
│  │     (121)            │  │              │
│  └──────────────────────┘  │     ┌──────────────────────┐
│  ┌──────────────────────┐  │     │  MAP CREATING UNIT   │
│  │ ACCELERATION SENSOR  │  │     │      (150)           │
│  │     (122)            │  │     └──────────────────────┘
│  └──────────────────────┘  │
└────────────────────────────┘
```

[FIG. 2]

ROI

10

[FIG. 3]

<u>130</u>

```
┌─────────────────────────┐        ┌──────────────────────────┐
│ POSITION RECOGNIZING UNIT│        │                          │
│         (131)            │────────│                          │
└─────────────────────────┘        │  MOVEMENT CONTROL UNIT    │
                                    │         (133)            │
┌─────────────────────────┐        │                          │
│  STATE DETERMINING UNIT  │────────│                          │
│         (132)            │        │                          │
└─────────────────────────┘        └──────────────────────────┘
```

[FIG. 4]

[FIG. 5]

$$\begin{cases} X = (X,Y,Z) \\ F = (f+f')/2 \end{cases}$$

$(\sigma_c, \sigma_r)$

Uncertainty covariance ellipsoid

LEFT CAMERA (REFERENCE)

RIGHT CAMERA

[FIG. 6]

[FIG. 7]

[FIG. 8]

```
                    ( START )
                        │
                        ▼
┌──────────────────────────────────────────┐
│  ESTIMATE THREE-DIMENSIONAL ANGLE OF      │
│  MOBILE ROBOT USING INFORMATION           │──── S810
│  COLLECTED BY GYRO SENSOR CONNECTED       │
│  TO MOBILE ROBOT                          │
└──────────────────────────────────────────┘
                        │
                        ▼
┌──────────────────────────────────────────┐
│  OBTAIN THREE-DIMENSIONAL ANGLE           │
│  INFORMATION OF MOBILE ROBOT BY FILTERING │
│  THREE-DIMENSIONAL ANGLE ESTIMATED        │──── S820
│  USING INFORMATION COLLECTED BY GYRO      │
│  SENSOR CONNECTED TO MOBILE ROBOT         │
└──────────────────────────────────────────┘
                        │
                        ▼
┌──────────────────────────────────────────┐
│  DISTINGUISH STATE OF MOBILE ROBOT USING  │
│  OBTAINED THREE-DIMENSIONAL ANGLE         │──── S830
│  INFORMATION OF MOBILE ROBOT              │
└──────────────────────────────────────────┘
                        │
                        ▼
                    ( END )
```

[FIG. 9]

120

```
┌─────────────────────┐        ┌─────────────────────┐
│                     │        │    GYRO  SENSOR     │
│                     │────────│       (121)         │
│                     │        └─────────────────────┘
│  CORRECTING  UNIT   │
│       (123)         │
│                     │        ┌─────────────────────┐
│                     │────────│ ACCELERATION SENSOR │
│                     │        │       (122)         │
└─────────────────────┘        └─────────────────────┘
```

[FIG. 10]

[FIG. 11]

EP 3 159 123 A1

TRIAXIAL GYRO SENSOR

TRIAXIAL ACCELERATION SENSOR

S1110
CALCULATE AVERAGE AND STANDARD DEVIATION OF MEASUREMENT VALUES OF GYRO SENSOR AND ACCELERATION SENSOR FOR LATEST ONE SECOND

WHEEL ENCODER OF MOBILE ROBOT

WHEEL ENCODER OF MOBILE ROBOT

S1120
A. IT IS DETERMINED THAT MOBILE STOPS WHEN ENCODER IS NOT CHANGED AND STANDARD DEVIATION IS LOWER THAN 0.1 DEGREE/SEC
B. WHEN ROTATIONAL COMPONENT IS EQUAL TO OR LOWER THAN 5 DEGREES/SEC AND ACCELERATION IS NOT ZERO AS WHEEL ENCODER ANALYSIS RESULT, IT IS DETERMINED THAT MOBILE ROBOT MOVES STRAIGHT
C. IN CASES OTHER THAN A AND B, IT IS DETERMINED THAT MOBILE ROBOT OPERATES (M)

S1130
WHEN MOBILE ROBOT OPERATES, WEIGHTED VALUE W = 0

S1140
WHEN MOBILE ROBOT STOPS, WEIGHTED VALUE W = 0.5

S1150
WHEN MOBILE ROBOT MOVES STRAIGHT, WEIGHTED VALUE W = 0.05

S1160
CORRECT BIAS VALUE

S1170
RESET GRAVITATIONAL ACCELERATION

[FIG. 12]

(a)

(b)

L

(c)

[FIG. 13]

```
                    ┌─────────────┐
                    │    START    │
                    └──────┬──────┘
                           │
                           ▼
          ┌────────────────────────────────┐
          │      INPUT SETERO IMAGE         │──── S1310
          └────────────────┬───────────────┘
                           │
                           ▼
          ┌────────────────────────────────┐
          │       TRACE FEATURE POINT       │──── S1320
          └────────────────┬───────────────┘
                           │
                           ▼
          ┌────────────────────────────────┐
          │      REMOVE MOVING OBJECT       │──── S1330
          └────────────────┬───────────────┘
                           │
  S1340                    │                        S1342
    ┌─────────────────────┐│         ┌─────────────────────────┐
    │  OBTAIN FIRST ODOMETRY│        │  OBTAIN SECOND ODOMETRY  │
    │     INFORMATION       │        │       INFORMATION        │
    └──────────┬──────────┘          └───────────┬─────────────┘
               │                                 │
               ▼           ┌─────────────────────┘
          ┌────────────────────────────────┐
          │   SELECT ODOMETRY INFORMATION   │──── S1350
          └────────────────┬───────────────┘
                           │
                           ▼
          ┌────────────────────────────────┐
          │    PREDICT STATE INFORMATION    │──── S1360
          └────────────────┬───────────────┘
                           │
                           ▼
          ┌────────────────────────────────┐
          │        SEARCH KEY FRAME         │──── S1370
          └────────────────┬───────────────┘
                           │
                           ▼
          ┌────────────────────────────────┐
          │    ESTIMATE CURRENT POSITION    │──── S1380
          └────────────────┬───────────────┘
                           │
                           ▼
                    ┌─────────────┐
                    │     END     │
                    └─────────────┘
```

**EP 3 159 123 A1**

## INTERNATIONAL SEARCH REPORT

| International application No. |
| --- |
| **PCT/KR2015/006157** |

**A. CLASSIFICATION OF SUBJECT MATTER**

***B25J 13/08(2006.01)i, B25J 9/16(2006.01)i***

According to International Patent Classification (IPC) or to both national classification and IPC

**B. FIELDS SEARCHED**

Minimum documentation searched (classification system followed by classification symbols)
B25J 13/08; G05D 1/02; B25J 9/10; A47L 9/28; B25J 9/16

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: odometry, image, inertia, key frame, edge, stereo, optical angle

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2012-0070291 A (SAMSUNG ELECTRONICS CO., LTD.) 29 June 2012<br>See claims 1-5, 16-20, paragraphs [0057]-[0081] and figures 3, 4. | 1-20 |
| A | KR 10-2010-0119442 A (LG ELECTRONICS INC.) 09 November 2010<br>See claims 1, 4, 6, 7, 8, paragraphs [0020]-[0039] and figures 1, 2. | 1-20 |
| A | KR 10-2003-0095492 A (SAMSUNG ELECTRONICS CO., LTD.) 24 December 2003<br>See claims 1-4, the detailed description of the invention (the constitution and operation of the invention), figures 5, 6a, 6b. | 1-20 |

☐ Further documents are listed in the continuation of Box C.   ☒ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| 04 AUGUST 2015 (04.08.2015) | **04 AUGUST 2015 (04.08.2015)** |

| Name and mailing address of the ISA/**KR** | Authorized officer |
| --- | --- |
| Korean Intellectual Property Office<br>Government Complex-Daejeon, 189 Seonsa-ro, Daejeon 302-701, Republic of Korea<br>Facsimile No.  82-42-472-7140 | Telephone No. |

Form PCT/ISA/210 (second sheet) (July 2009)

INTERNATIONAL SEARCH REPORT
Information on patent family members

International application No.

**PCT/KR2015/006157**

| Patent document cited in search report | Publication date | Patent family member | Publication date |
|---|---|---|---|
| KR 10-2012-0070291 A | 29/06/2012 | US 2012-0155775 A1<br>US 8873831 B2 | 21/06/2012<br>28/10/2014 |
| KR 10-2010-0119442 A | 09/11/2010 | KR 10-1513639 B1 | 20/04/2015 |
| KR 10-2003-0095492 A | 24/12/2003 | CN 1202404 C<br>CN 1467480 A<br>JP 2004-021978 A<br>KR 10-0478452 B1<br>US 2003-0236590 A1 | 18/05/2005<br>14/01/2004<br>22/01/2004<br>23/03/2005<br>25/12/2003 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2015006157 W

- KR 1020140073708

**Non-patent literature cited in the description**

- **M. CALONDER ; V. LEPETIT ; M. OZUYSAL ; T. TRZCINSKI ; C. STRECHA ; P. FUA.** Computing a Local Binary Descriptor Very Fast. *IEEE Transactions on Pattern Analysis and Machine Intelligence,* 2012